(19) **Europäisches Patentamt**

**European Patent Office**

**Office européen des brevets**

(11) **EP 1 433 562 A1**

(12) **EUROPÄISCHE PATENTANMELDUNG**

(43) Veröffentlichungstag:
    **30.06.2004  Patentblatt 2004/27**

(51) Int Cl.⁷: **B23K 26/10**, B25J 19/00

(21) Anmeldenummer: **03023355.5**

(22) Anmeldetag: **16.10.2003**

(84) Benannte Vertragsstaaten:
    **AT BE BG CH CY CZ DE DK EE ES FI FR GB GR
    HU IE IT LI LU MC NL PT RO SE SI SK TR**
    Benannte Erstreckungsstaaten:
    **AL LT LV MK**

(30) Priorität: **24.12.2002  DE 10261592**

(71) Anmelder: **Reis GmbH & Co. Maschinenfabrik
    63785 Obernburg (DE)**

(72) Erfinder:
    • **Fischer, Axel
      63785 Obernburg (DE)**
    • **Kroth, Eberhard, Dr.
      63785 Obernburg (DE)**

(74) Vertreter:
    **Draudt, Axel Hermann Christian, Dipl.-Ing.
    Dr. Sturies - Eichler - Füssel
    Patentanwälte
    Lönsstrasse 55
    42289 Wuppertal (DE)**

(54) **Knickarmroboter**

(57)    Es wird ein Knickarmroboter (10) für die Bearbeitung von Werkstücken mittels Laserstrahlung (12) beschrieben, der mindestens erste bis fünfte Achsen (1,2,3,4,5) und eine Lasereinrichtung (14) aufweist. Dabei ist die Lasereinrichtung (14) an der zweiten Achse (2) angeordnet und die damit erzeugbaren Laserstrahlen (12) sind vor ihrem Auftreffen auf das Werkstück im wesentlichen innerhalb der dritten bis fünften Achsen (3,4,5) führbar.

Fig.1

EP 1 433 562 A1

**Beschreibung**

Die Erfindung betrifft einen Knickarmroboter für die Bearbeitung von Werkstücken mittels Laserstrahlung, mit mindestens erste bis fünfte Achsen und mit einer Lasereinrichtung.

Ein Knickarmroboter mit den vorgenannten Merkmalen ist beispielsweise aus der EP 0 901 875 bekannt. Dieser bekannte Knickarmroboter ist dabei so ausgestaltet, daß er in allen Richtungen des kathesischen Koordinatensystems erforderliche Bewegungen im Rahmen der Reichweiten seiner ersten bis fünften Achsen durchführen kann. Die Numerierung dieser fünf Achsen ist für Knickarmroboter allgemein bekannt und werden angefangen von der am Fundament bzw. am Boden angeordneten senkrechten ersten Achse aufsteigend bis zur Roboterhand durchnumeriert. Es wird darauf hingewiesen, daß, wie in Fachkreisen üblich, der Begriff Achse nicht ausschließlich die Schwenkachse, sondern auch die um die Schwenkachse bewegten Bauteile, z.B. Arme bezeichnet.

Üblicherweise enthält bei derartigen bekannten Knickarmrobotern die dritte Achse die Lasereinrichtung zur Erzeugung von Laserstrahlen, mit denen die Werkstücke zu bearbeiten sind.

Dies wird allerdings, gerade im Hinblick auf schnellere Arbeitsbewegungen als besonders hinderlich angesehen, da diese Lasereinrichtung doch erheblich zu dem Gewicht beiträgt, das zusammen mit der dritten Achse bewegt werden muß. Dadurch entstehen einerseits Grenzen bezüglich der Laserleistungen, da Laser mit höheren Leistungen aufgrund ihres größeren Gewichts nicht mehr einsetzbar sind, und andererseits kann die Taktzeit bzw. die Bewegung der einzelnen Achsen, insbesondere der ersten bis dritten Achse nicht mehr beschleunigt werden, da dies einerseits zu Ungenauigkeiten bei den Bewegungsabläufen führt und andererseits einen unangemessen hohen technischen und somit auch kostenmäßigen Aufwand bedeutet.

Der Erfindung liegt daher die Aufgabe zugrunde, einen Knickarmroboter der eingangs genannten Art anzugeben, der mit technisch einfachen Mitteln sowohl eine Leistungssteigerung bezüglich der Laserleistung und auch des Ausstoßes ermöglicht und gleichzeitig die Herstellungskosten reduziert.

Diese Aufgabe wird bei einem Knickarmroboter der eingangs genannten Art erfindungsgemäß dadurch gelöst, daß die Lasereinrichtung an der zweiten Achse angeordnet und die damit erzeugbaren Laserstrahlen vor ihrem Auftreffen auf das Werkstück im wesentlichen innerhalb der dritten bis fünften Achsen führbar sind.

Für die Erfindung ist es von besonderer Bedeutung, daß die Lasereinrichtung nunmehr an der zweiten Achse angeordnet ist. Dadurch kann die Bewegung der Bearbeitungsoptik mit einer wesentlich höheren Dynamik erfolgen. Da die Strahlenführungsvorrichtungen auch noch im wesentlichen im Inneren der dritten bis fünften Achsen angeordnet ist, können diese auch noch besser vor Außeneinflüssen geschützt werden. Dadurch ist auch eine günstigere Massenverteilung gegeben, da nunmehr die dritte Achse verglichen mit bekannten Knickarmrobotern wesentlich leichter ist. Des weiteren wird dadurch die Einhaltung von Randbedingungen für den Lasereinsatz in Verbindung mit Robotern wesentlich unkritischer, da die Baugröße und das Gewicht des Lasers eine untergeordnete Rolle spielen. Des weiteren wird der Laser wesentlich geringeren Beschleunigungen und Geschwindigkeiten ausgesetzt, so daß dadurch auch noch eine höhere Lebensdauer für den Laser selbst resultiert.

Außerdem können durch die vorteilhafte Anbringung des Lasers an der zweiten Achse nunmehr auch Laser größerer Leistung und somit höheren Gewichts verwandt werden. Ferner können aufgrund des erfindungsgemäßen Anordnens der Lasereinrichtung Laser unterschiedlicher Hersteller aber auch einfach Laser unterschiedlicher Arten eingesetzt werden. Da die Lasereinrichtung nicht mehr auf der dritten Achse angeordnet ist, ergeben sich bei der Bearbeitung wesentlich kleinere Störkonturen, die naturbedingt einen flexibleren Einsatz ermöglichen. Dies erleichtert auch 3-D-Bearbeitungen besonders ausgebildeter Werkstücke. Zudem ist es auch noch möglich, den Antrieb der dritten Achse bzw. den Arm wesentlich schlanker und auch noch mit kleineren Massen auszulegen. Dies erhöht wiederum die Genauigkeit der Bewegungen und trägt auch noch zu einer Erhöhung der Bewegungsgeschwindigkeiten bei.

Es sind mehrere Möglichkeiten gegeben, um den sogenannten Laser-Rohstrahl in das Achsensystem einzuleiten. Vorteilhaft ist es aber, wenn daß im Betriebszustand der Laser-Rohstrahl im wesentlichen seitlich entlang der Armstruktur zwischen der zweiten und der dritten Achse verläuft und im wesentlichen senkrecht auf die dritte Achse trifft.

Dabei ist es dann noch von besonderem Vorteil, wenn die dritte Achse als antreibbare Hohlwelle ausgeführt ist.

Besonders unabhängig von der Laserleistung ist man dann, wenn im Betriebszustand die Laserstrahlen über ein mehrere Spiegel aufweisendes Strahlführungssystem auf das Werkstück leitbar sind und daß dieses Strahlführungssystem innerhalb der dritten bis fünften Achse angeordnet ist.

Dazu sieht eine weitere Ausgestaltung der Erfindung es vor, daß die Spiegel derart angeordnet sind, daß im Betriebszustand die Laserstrahlen im Bereich der fünften Achse bzw. der Roboterhand von der vierten Achse versetzt auf die fünfte Achse auftreffen und anschließend über Spiegel auf das Werkstück geworfen werden.

Dies ist einerseits möglich, wenn die Laserstrahlen über Spiegel leitbar sind.

Eine besonders sichere Anordnung ist dabei dann gegeben, wenn ein erster Spiegel so angeordnet ist, daß er den Laser-Rohstrahl der Lasereinrichtung im wesentlichen konzentrisch zur dritten Achse auf einen zweiten Spiegel wirft, der die Laserstrahlen im wesentlichen konzentrisch zur vierten Achse auf einen dritten Spiegel wirft und daß zur freien Drehbarkeit der fünften Achse bzw. der dazu gehörenden Roboterhand dieser dritte Spiegel die Laserstrahlen quer zur vierten Achse nach außen auf einen vierten Spiegel wirft, dieser die Laserstrahlen in etwa parallel zur vierten Achse auf einen fünften Spiegel wirft, der die Laserstrahlen quer zur vierten Achse wieder nach innen auf einen im Schnittpunkt der vierten und fünften Achse angeordneten sechsten Spiegel wirft, von wo aus die Laserstrahlen auf das Werkstück geworfen werden.

Um die Justieraufgaben bezüglich der Spiegel noch weiter zu reduzieren, ist es vorteilhaft, wenn die Laserstrahlen über vier Spiegel auf das Werkstück leitbar sind.

Eine derartige Anordnung ist dann besonders vorteilhaft, wenn ein erster Spiegel, der so angeordnet ist, daß er den Laser-Rohstrahl der Lasereinrichtung im wesentlichen konzentrisch zur dritten Achse auf einen zweiten Spiegel wirft, der in einer Spiegelführung aufgenommen ist und die Laserstrahlen bei Drehung der vierten Achse auf einer Kegelhüllfläche definiert zum dritten Spiegel leitet, der sich wiederum bei einer Drehung der vierten Achse auf einer Kreisbahn bewegt und die Laserstrahlen auf einen vierten Spiegel leitet, welcher die Laserstrahlen auf das Werkstück wirft.

Es sind eine Vielzahl von Spiegelführungen denkbar. Vorteilhaft ist es aber, wenn die Spiegelführung aus einem Grundkörper, einer Spiegelaufnahme, einem Koppelgetriebe und einem Verbindungselement besteht, wobei der Grundkörper der Spiegelführung um die dritte Achse drehbar gelagert ist.

Dabei ist gemäß einer besonders einfachen Ausführungsform es vorgesehen, daß die kreisbahnförmige Bewegung des dritten Spiegels mittels eines Verbindungselements auf die Spiegelführung übertragbar ist.

Wesentlich ist es möglich, daß das Verbindungselement Bewegungen mechanisch zwangsgeführt ist oder durch mit Fremdenergie betriebenen Aktoren bewegt wird. Falls eine mechanische Bewegungsübertragung gewählt wird, ist es vorteilhaft, wenn das mechanische Verbindungselement ein in der Verbindungsachse beider Spiegel liegendes Schutzrohr ist.

Gemäß einer Weiterbildung der Erfindung ist es vorgesehen, daß das Verbindungselement auf der einen Seite mit dem Grundkörper der Spiegelführung über ein Gelenk verbunden ist, dessen Achse senkrecht zur Drehachse des Grundkörpers und gleichzeitig durch den Schnittpunkt der dritten und vierten Achsen geht, und auf der anderen Seite mit der Roboterhand verbunden ist.

Es ist eine Vielzahl von Koppelgetrieben allgemeinster Art denkbar. Vorteilhaft ist es aber, wenn das Koppelgetriebe das Verbindungselement mit der Spiegelaufnahme verbindet und den Aufbau eines Planetengetriebes aufweist.

Dabei kann es vorgesehen werden, daß das Sonnenrad des Planetengetriebes fest mit dem Grundkörper verbunden ist und das Hohlrad fest mit dem Verbindungselement verbunden ist, wobei mindestens ein Planetenrad drehbar an der Spiegelaufnahme angeschlossen ist.

Für die Übertragung der Einzelbewegung der einzelnen Spiegel ist es vorteilhaft, wenn der Winkel zwischen der Spiegelfläche des zweiten Spiegels und der vierten Achse in der Schnittebene wie folgt ermittelbar ist:

$$\alpha_2 = 45° \pm \arctan a_3/a_2 * 0,5,$$

wobei $a_2$ der Abstand zwischen dem zweiten und dritten Spiegel und $a_3$ der Abstand zwischen dem dritten und vierten Spiegel voneinander bedeuten und das Vorzeichen von der Lage der vierten Achse im Raum abhängt.

Zur weiteren Vereinfachung ist es dabei vorteilhaft, wenn der Winkel zwischen der Spiegelfläche des dritten Spiegels und der fünften Achse in der Schnittebene wie folgt ermittelbar ist:

$$\alpha_{3A} = 45° - \arctan a_3/a_2 * 0,5$$

wobei $a_2$ der Abstand zwischen dem zweiten und dritten Spiegel und $a_3$ der Abstand zwischen dem dritten und vierten Spiegel voneinander bedeuten.

Da die einzelnen Spiegel bezüglich ihrer Übertragungsfähigkeit sehr schmutzempfindlich sind, ist es vorteilhaft, wenn der Innenraum der gesamten Strahlführung gegenüber der Antriebstechnik der Achsen abgedichtet ist.

Um eventuell bei der Herstellung der Einzelteile auftretende Toleranzen ausgleichen zu können, ist es vorteilhaft, wenn die Lasereinrichtung justierbar ausgestaltet ist.

Aufgrund der erfindungsgemäßen Spiegelführung ist es möglich, daß die Länge der vierten Achse geeignet vorwählbar ist.

Insbesondere bei der Bearbeitung von Kunststoff ist es vorteilhaft, wenn eine beliebig gestaltete Prozeßgaszuführung vorhanden ist.

Selbstverständlich ermöglicht die Erfindung auch den Einsatz unterschiedlicher Laserarten.

Weitere Vorteile und Merkmale ergeben sich aus der folgenden Beschreibung mehrer Ausführungsbeispiele sowie aus den Figuren, auf die Bezug genommen wird. Es zeigen:

Fig.1     eine Perspektivansicht eines Knickarmroboters gemäß einer ersten Ausführungsform, unter anderem zur Darstellung der fünf Achsen;

Fig.2     eine geschnittene Teilansicht des in Fig.1 dargestellten Ausführungsbeispiels von oben;

Fig.3    eine geschnittene Teilansicht der in Fig.2 dargestellten Ausführungsform senkrecht zur Blattebene;

Fig.4    eine teilweise geschnittene Draufsicht auf ein weiteres Ausführungsbeispiel zur Darstellung der Spiegelführung; und

Fig.5    eine teilweise geschnittene Ansicht des Ausführungsbeispiels gemäß Fig.4, gesehen senkrecht zur Blattebene.

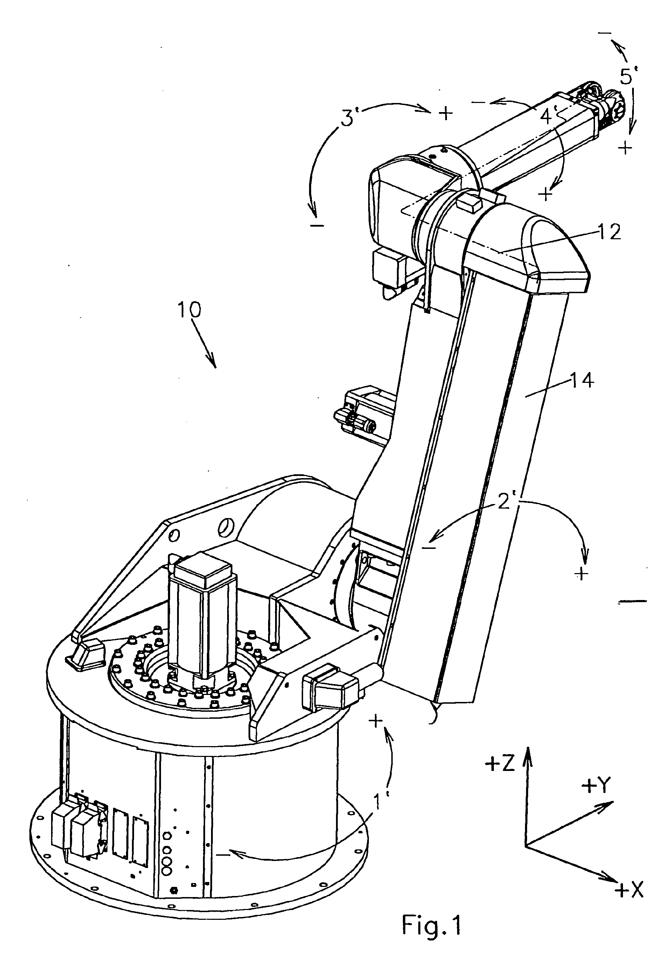

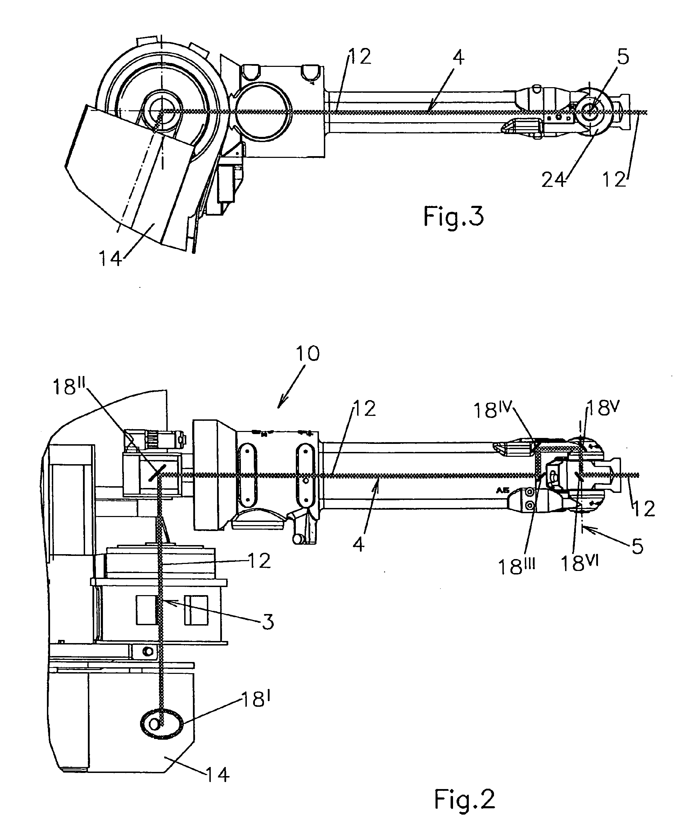

Anhand der Fig.1 bis 5 werden nun verschiedene Ausführungsbeispiele eines Knickarmroboters 10 beschrieben. Dabei werden, soweit nichts anderes ausgesagt, für gleiche Begriffe gleiche Bezugszahlen verwandt. Es wird darauf hingewiesen, daß, wie in Fachkreisen üblich, der Begriff Achse nicht ausschließlich die Schwenkachse, sondern auch die um die Schwenkachse bewegten Bauteile, z.B. Arme bezeichnet.

Der in Fig.1 gezeigte Knickarmroboter 10 dient zur Bearbeitung von Werkstücken mittels Laserstrahlung. Ein derartiger Knickarmroboter ist prinzipiell so aufgebaut, wie er in der DE 43 35 367 beschrieben wurde. Ein derartiger Knickarmroboter 10 ist so ausgestaltet, daß seine einzelnen Bestandteile in allen Richtungen des kathesischen Koordinatensystems die erforderlichen Bewegungen im Rahmen der Reichweiten seiner Achsen durchführen kann. Dieser Knickarmroboter 10 ist mit ersten bis fünften Achsen 1,2,3,4 und 5 für die 3-D Bearbeitung von Werkstücken ausgebildet. Dabei besitzt jeder der fünf Achsen 1,2,3,4 und 5 einen nicht dargestellten Stellmotor für den entsprechenden Drehantrieb. Diese Stellmotoren können von einer Bahnsteuerung so beaufschlagt werden, daß sie die gewünschten Bewegungen insbesondere Achsbewegungen veranlassen.

Wie aus Fig.1 ersichtlich, ist die erste Achse 1 diejenige, um die sich der gesamte weitere Knickarmroboter 10 um eine senkrechte Achse verdrehen kann. Daran schließt sich die zweite Achse an, die sich im wesentlichen senkrecht zur ersten Achse 1 verdrehen kann. Dabei erfolgt die Drehung dieser zweiten Achse 2 um eine Achse, die nicht die erste Achse 1 schneidet. Am darauf folgenden Ende der zweiten Achse 2 ist eine dritte Achse 3 angeschlossen, die wiederum Drehbewegungen bezüglich dieses Endes der zweiten Achse 2 ermöglicht, wobei allerdings diese Achse 3 parallel zur zweiten Achse 2 liegt. Zur weiteren Erhöhung der Beweglichkeit des Knickarmroboters 10 ist an die dritte Achse wiederum eine vierte Achse 4 angeschlossen, die wiederum auf der dritten Achse 3 senkrecht steht und diese schneidet. Abschließend ist eine fünfte Achse 5 vorhanden, um die eine Roboterhand 24 verschwenkt werden kann. Diese fünfte Achse 5 steht im wesentlichen senkrecht zur vierten Achse 4 und schneidet diese.

Selbstverständlich weist die Roboterhand 24 die für auf Laserbasis arbeitenden Knickarmroboter 10 notwendige Optik auf.

Wie sich aus allen Figuren ergibt, ist seitlich entlang der Armstruktur der zweiten Achse 2 und dritten Achse 3 eine Lasereinrichtung 14 angeordnet. Dies ist derart ausgeführt, daß die damit erzeugbaren Laserstrahlen 12 vor ihrem Auftreffen auf das Werkstück im wesentlichen innerhalb der dritten bis fünften Achsen 3,4 und 5 führbar sind. Dabei ist die Lasereinrichtung 14 so an der zweiten Achse 2 angeordnet, daß der Laser-Rohstrahl zum Beispiel parallel zum nicht näher bezeichneten Schwenkarm senkrecht auf die dritte Achse 3 trifft.

Die dritte Achse 3 ist mit einem Hohlwellenantrieb ausgeführt. Durch diese Hohlwelle wird der Laserstrahl 12 durch einen Spiegel 18I so geleitet, daß er konzentrisch zur Achse 3 und senkrecht auf die vierte Achse 4 trifft. Bei diesem Schnittpunkt ist ein zweiter Spiegel 18II angeordnet, der die Laserstrahlen 12 im wesentlichen konzentrisch zur vierten Achse 4 auf einen dritten Spiegel 18III wirft. Zur freien Drehbarkeit der fünften Achse 5 bzw. der dazugeordneten Roboterhand 24 wirft dieser dritte Spiegel 18III die Laserstrahlen 12 quer zur vierten Achse 4 nach außen auf einen vierten Spiegel 18IV. Dieser vierte Spiegel 18IV wirft wiederum in etwa parallel zur vierten Achse 4 die Laserstrahlen 12 auf einen fünften Spiegel 18V, der die Laserstrahlen 12 wiederum quer zur vierten Achse 4 wieder nach innen auf einen im Schnittpunkt der vierten Achse 4 und fünften Achse 5 angeordneten sechsten Spiegel 18VI wirft. Von diesem sechsten Spiegel 18VI werden die Laserstrahlen 12 auf das Werkstück selbstverständlich nach Durchlaufen entsprechender Optiken geworfen. Diese Lösung des Strahlenganges ist bereits aus EP 0 901 875 bekannt.

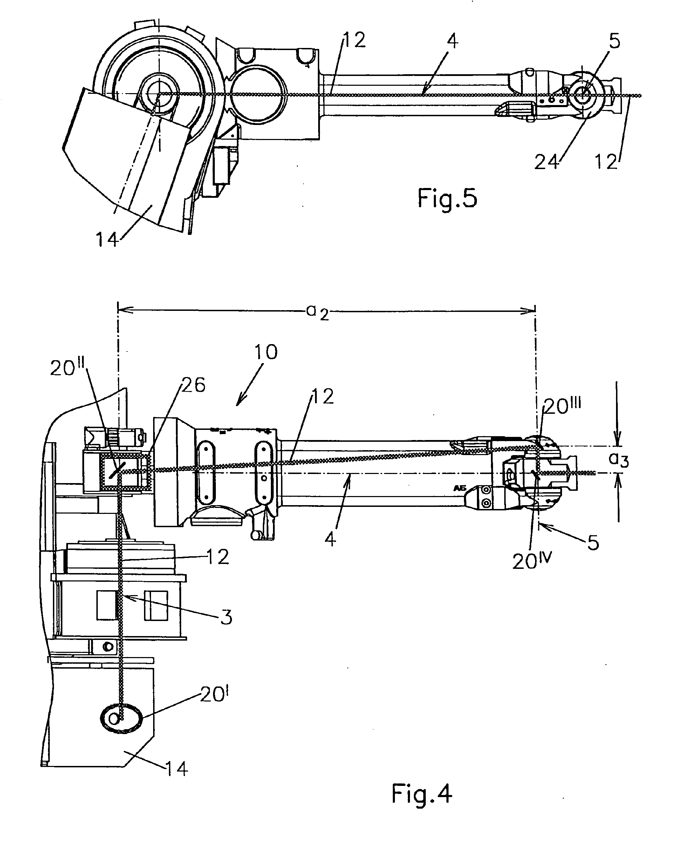

Es ist aber auch möglich, die Strahlführung lediglich mit Hilfe von vier Spiegeln 20I bis 20IV durchzuführen. Dies ist in den Fig.4 und 5 näher dargestellt.

Dazu ist ein erster Spiegel 20I, so angeordnet, daß er den Laser-Rohstrahl der Lasereinrichtung 14 im wesentlichen konzentrisch zur dritten Achse 3 und senkrecht zur vierten Achse 4 auf einen zweiten Spiegel 20II trifft, der in einer Spiegelführung 26 aufgenommen ist und sich in etwa im Schnittpunkt der dritten und vierten Achse 3 und 4 befindet. Von diesem zweiten Spiegel 20II werden die Laserstrahlen 12 bei Drehung der vierten Achse 4 auf eine Kegelhüllfläche definiert zu einem dritten Spiegel 20III geleitet, der auf der fünften Achse 5 innerhalb einer Roboterhand 24 angeordnet ist. Dieser dritte Spiegel 20III bewegt sich wiederum bei einer Drehung der vierten Achse 4 auf einer Kreisbahn und wirft die Laserstrahlen 12 auf einen vierten Spiegel 20IV, welche wiederum die Laserstrahlen 12 auf das Werkstück wirft.

Diese Variante ist also ähnlich wie die Lösung mit sechs Spiegeln mit dem Unterschied, daß der zweite Spiegel 20II über eine über die Spiegelführung 26 die Laserstrahlen 12 bei Drehung der vierten Achse auf eine Kegelhüllfläche definiert zum dritten Spiegel 20III leitet.

Die Spiegelführung 26 besteht aus einem nicht näher bezeichneten Grundkörper, einer nicht näher bezeichneten Spiegelaufnahme sowie einer allgemeinen Übertragung in diesem Fall in Form eines Koppelgetriebes sowie aus einem Verbindungselement. Dadurch ist der Grundkörper der Spiegelführung 26 um die dritte Achse 3 drehbar gelagert. Bei einer Drehung der vierten Achse 4 bewegt sich der dritte Spiegel 20III auf einem Kreis. Um diese Bewegung auf die Spiegelführung 26 zu übertragen, wird ein mechanisches Verbindungselement, das nicht dargestellt ist, zwischen der Spiegelführung 26 und dem dritten Spiegel 20III bzw. der Roboterhand 24 eingesetzt. Obwohl nicht dargestellt, kann dieses Verbindungselement allerdings auch die Bewegung mit Hilfe von Fremdenergie betriebener Aktoren und/ oder einer Mischung dieser Übertragungsmöglichkeiten bieten.

Zum Beispiel kann dieses Verbindungselement ein in der Verbindungsachse der zweiten und dritten Spiegel 20II und III liegendes Schutzrohr sein.

Das Verbindungselement ist auf der einen Seite mit dem Grundkörper der Spiegelführung 26 über ein Gelenk verbunden, dessen Achse senkrecht zu dessen Drehachse des Grundkörpers und gleichzeitig durch den Schnittpunkt der dritten und vierten Achsen 3 und 4 geht.

Auf der anderen Seite ist das Verbindungselement mit der Roboterhand 24 verbunden. Bei einer Drehung der vierten Achse 4 wird hierdurch der Grundkörper der Spiegelführung 26 in der Winkellage des Verbindungselementes synchron mitgeführt. Das Verbindungselement selbst kann in der Verbindungsachse der zweiten und dritten Spiegel 20II und III Drehbewegungen der vierten Achse 4 ausgleichen.

Die Spiegelaufnahme ist in dem Grundkörper in der gleichen Achse wie das Verbindungselement schwenkbar gelagert. In der Spiegelaufnahme wird der zweite Spiegel 20II über einen Spiegelflansch mit Justageeinrichtung montiert. Damit der Laserstrahl 12 bei Auslenkung des Verbindungselementes um dessen Drehachse im Grundkörper definiert in die Verbindungsachse zwischen dem zweiten und dritten Spiegel 20II und III geführt wird, erfolgt eine Zwangskopplung des Verbindungselementes und der Spiegelaufnahme über ein Koppelgetriebe. Dabei ist zu bemerken, daß auch andere Übertragungsarten möglich sind, in diesem Fall allerdings die Art eines Koppelgetriebes gewählt wurde. Auch für die Auswahl eines Getriebes gibt es verschiedene Möglichkeiten.

Das gewählte Koppelgetriebe hat den Aufbau eines Planetengetriebes. Das Sonnenrad ist dabei fest mit dem Grundkörper und das Hohlrad dabei fest mit dem Verbindungselement verbunden. Mindestens ein Planetenrad ist drehbar an der Spiegelaufnahme befestigt. Bei einem Verhältnis von 2 der Teilkreisdurchmesser zwischen dem Hohlrad und dem Sonnenrad bewegt sich das Planetenrad bzw. die Planetenräder genau mit halber Winkelgeschwindigkeit des Verbindungselements. Hierdurch wird der Laserstrahl 12 genau in die Verbindungsachse zwischen den zweiten und dritten Spiegeln 20II und III geführt.

In der in Fig.4 gezeigten Winkelstellung der vierten Achse 4 beträgt der Winkel zwischen der Spiegelfläche des zweiten Spiegels 20II und der vierten Achse 4 in der Schnittebene

$$\alpha_1 = 45° + \arctan a_3/a_2 * 0{,}50.$$

Bei einer Drehung der vierten Achse 4 um 180° stellt sich ein Winkel von

$$\alpha_{21} = 45° - \arctan a_2/a_3 * 0{,}50$$

ein. Hierbei ist der Winkel senkrecht zur Schnittebene jeweils $\alpha_{22} = 90°$.

Wird allerdings die vierte Achse 4 aus der gezeigten Stellung um 90° gedreht, so stellt sich über die Spiegelführung 26 in der Schnittebene von $\alpha_{21} = 45°$ ein.

Der Winkel senkrecht zur Schnittebene beträgt dann je nach Drehrichtung

$$\alpha_{22} = 90° \pm \arctan a_3/a_2.$$

Der dritte Spiegel 20III ist starr in der Roboterhand 24 eingebaut. Der Winkel zwischen der Spiegelfläche des dritten Spiegels und der fünften Achse 5 in der Schnittebene beträgt dabei

$$\alpha_{3A} = 45° - \arctan a_3/a_2 * 0{,}50.$$

Der Winkel senkrecht zu dieser Schnittebene beträgt dabei $\alpha_{3B} = 90°$.

Obwohl nicht näher dargestellt, ist der Innenraum der gesamten Strahlführung gegenüber der Antriebstechnik der Achsen 1 bis 5 abgedichtet, damit die Möglichkeit des Verschmutzens eines der Spiegel so gering wie möglich ist. Besonders vorteilhaft ist, daß der Antrieb der fünften Achse 5 ein im Schwenkarm integrierter mitdrehender Kleinmotor ist.

Es sind auch aufgrund der besonderen Strahlführung unterschiedliche Armlängen der vierten Achse 4 möglich. Aufgrund des Längenverhältnisses $a_3/a_2$ ist der Kippwinkel des zweiten Spiegels 20II relativ klein. Daher eignet sich dieses System für unterschiedliche Armlängen bzw. für unterschiedliche Größen von $a_2$, ohne konstruktive Änderungen der Spiegelführung vornehmen zu müssen.

Grundsätzlich kann die beschriebene Lösung der Spiegelführung auch an anderen Achsen eingesetzt werden, bei denen ein Laserstrahl definiert um etwa 90° ± α umgelenkt werden soll. Dabei hat es sich herausgestellt, daß es durchaus möglich ist, diesen Winkel α auf bis zu 30° zu wählen.

Des weiteren ist die Lasereinrichtung 14 justierbar ausgestaltet. Dies ermöglicht einerseits die Beseitigung von Maßtoleranzen. Andererseits wird dadurch aber auch ein Verwenden von Lasereinrichtungen unterschiedlichster Art ermöglicht, da mit Hilfe dieser Justage immer eine korrekte Einstellung möglich ist.

Schließlich sei noch bemerkt, daß auch eine beliebig gestaltete Prozeßgaszuführung, die in den Figuren nicht dargestellt ist, Verwendung finden kann. Diese dient insbesondere der Schnittabfallbeseitigung bei der Bearbeitung von Kunststoff. Aufgrund der Anordnung der Lasereinrichtung auf der zweiten Achse 2 kann die Bewegung der Bearbeitungsoptik mit wesentlich höherer Dynamik erfolgen. Die daraus resultierende günstigere Massenverteilung erleichtert des weiteren die Bewegungssteuerung. Die Einhaltung für Randbedingungen für den Lasereinsatz in Verbindung mit Robotern wird dadurch wesentlich unkritischer, da die Baugröße und insbesondere das Gewicht eine untergeordnete Rolle spielen. Die Lasereinrichtung wird nämlich wesentlich geringeren Beschleunigungen und Geschwindigkeiten ausgesetzt, wodurch sich unter anderem auch eine höhere Lebensdauer für die Lasereinrichtung ergibt.

Bezugszeichenliste:

| | |
|---|---|
| 1 | erste Achse |
| 2 | zweite Achse |
| 3 | dritte Achse |
| 4 | vierte Achse |
| 5 | fünfte Achse |
| 10 | Knickarmroboter |
| 12 | Laserstrahl |
| 14 | Lasereinrichtung |
| 18I | erster Spiegel |
| 18II | zweiter Spiegel |
| 18III | dritter Spiegel |
| 18IV | vierter Spiegel |
| 18V | fünfter Spiegel |
| 18IV | sechster Spiegel |
| 20I | erster Spiegel |
| 20II | zweiter Spiegel |
| 20III | dritter Spiegel |
| 20IV | vierter Spiegel |
| 24 | Roboterhand |
| 26 | Spiegelführung |
| α | Winkel |

**Patentansprüche**

**1.** Knickarmroboter (10) für die Bearbeitung von Werkstücken mittels Laserstrahlung (12), mit mindestens erste bis fünfte Achsen (1,2,3,4,5) und mit einer Lasereinrichtung (14) **dadurch gekennzeichnet, daß** die Lasereinrichtung (14) an der zweiten Achse (2) angeordnet und die damit erzeugbaren Laserstrahlen (12) vor ihrem Auftreffen auf das Werkstück im wesentlichen innerhalb der dritten bis fünften Achsen (3,4,5) führbar sind.

**2.** Knickarmroboter nach Anspruch 1, **dadurch gekennzeichnet, daß** im Betriebszustand der Laser-Rohstrahl im wesentlichen seitlich entlang der Armstruktur zwischen der zweiten und der dritten Achse (2,3) verläuft und im wesentlichen senkrecht auf die dritte Achse (3) trifft.

**3.** Knickarmroboter nach Anspruch 1 oder 2, **dadurch gekennzeichnet, daß** die dritte Achse (3) als antreibbare Hohlwelle (16) ausgeführt ist.

**4.** Knickarmroboter nach einem der Ansprüche 1 bis 3, **dadurch gekennzeichnet, daß** im Betriebszustand die Laserstrahlen (12) über ein mehrere Spiegel (18I-VI,20I-IV) aufweisendes Strahlführungssystem (22) auf das Werkstück leitbar sind und daß dieses Strahlführungssystem (22) innerhalb der dritten bis fünften Achse (3,4,5) angeordnet ist.

**5.** Knickarmroboter nach Anspruch 4, **dadurch gekennzeichnet, daß** die Spiegel (18I-VI,20I-IV) derart angeordnet sind, daß im Betriebszustand die Laserstrahlen (12) im Bereich der fünften Achse (5) bzw. der Roboterhand (24) von der vierten Achse (4) versetzt auf die fünfte Achse (5) auftreffen und anschließend über Spiegel (18V, VI;20III,IV) auf das Werkstück geworfen werden.

**6.** Knickarmroboter nach Anspruch 5, **dadurch gekennzeichnet, daß** die Laserstrahlen (12) über Spiegel (18I-VI) leitbar sind.

**7.** Knickarmroboter nach Anspruch 6, **dadurch gekennzeichnet, daß** ein erster Spiegel (18I) so angeordnet ist, daß er den Laser-Rohstrahl der Lasereinrichtung (14) im wesentlichen konzentrisch zur dritten Achse (3) auf einen zweiten Spiegel (18II) wirft, der die Laserstrahlen im wesentlichen konzentrisch zur vierten Achse (4) auf einen dritten Spiegel (18III) wirft und daß zur freien Drehbarkeit der fünften Achse (5) bzw. der dazu gehörenden Roboterhand (24) dieser dritte Spiegel (18III) die Laserstrahlen (12) quer zur vierten Achse (4) nach außen auf einen vierten Spiegel (18IV) wirft, dieser die Laserstrahlen (12) in etwa parallel zur vierten Achse (4) auf einen fünften Spiegel (18V) wirft, der die Laserstrahlen (12) quer zur vierten Achse (4) wieder nach innen auf einen im Schnittpunkt der vierten und fünften Achse (4,5) angeordneten sechsten Spiegel (18VI) wirft, von wo aus die Laserstrahlen (12) auf das Werkstück geworfen werden.

**8.** Knickarmroboter nach Anspruch 5, **dadurch gekennzeichnet, daß** die Laserstrahlen (12) über vier Spiegel (20I-IV) auf das Werkstück leitbar sind.

**9.** Knickarmroboter nach Anspruch 8, **dadurch gekennzeichnet, daß** ein erster Spiegel (20I) so angeordnet ist, daß der Laser-Rohstrahl der Lasereinrichtung (14) im wesentlichen konzentrisch zur dritten Achse (3) und senkrecht zur vierten Achse (4) auf einen zweiten Spiegel (20II) trifft, der in einer Spiegelführung (26) aufgenommen ist und die Laserstrahlen (12) bei Drehung der vierten Achse (4) auf einer Kegelhüllfläche definiert zum dritten Spiegel (20III) leitet, der sich wiederum bei einer Drehung der vierten Achse (4) auf einer Kreisbahn bewegt und die Laserstrahlen (12) auf einen vierten Spiegel (20IV) leitet, welcher die Laserstrahlen (12) auf das Werkstück wirft.

**10.** Knickarmroboter nach Anspruch 9, **dadurch gekennzeichnet, daß** die Spiegelführung (26) aus einem Grundkörper, einer Spiegelaufnahme, einem Koppelgetriebe und einem Verbindungselement besteht, wobei der Grundkörper der Spiegelführung (26) um die dritte Achse (3) drehbar gelagert ist.

**11.** Knickarmroboter nach einem der Ansprüche 9 oder 10, **dadurch gekennzeichnet, daß** die kreisbahnförmige Bewegung des dritten Spiegels (20III) mittels eines Verbindungselements auf die Spiegelführung (26) übertragbar ist.

**12.** Knickarmroboter nach Anspruch 11, **dadurch gekennzeichnet, daß** das Verbindungselement mechanisch zwangsgeführt ist oder durch mit Fremdenergie betriebenen Aktoren bewegt wird.

**13.** Knickarmroboter nach Anspruch 12, **dadurch gekennzeichnet, daß** das mechanische Verbindungselement ein in der Verbindungsachse beider Spiegel (20II,20III) liegendes Schutzrohr ist.

**14.** Knickarmroboter nach einem der Ansprüche 11 bis 13, **dadurch gekennzeichnet, daß** das Verbindungselement auf der einen Seite mit dem Grundkörper der Spiegelführung (26) über ein Gelenk verbunden ist, dessen Achse senkrecht zur Drehachse des Grundkörpers und gleichzeitig durch den Schnittpunkt der dritten und vierten Achsen (3,4) geht, und auf der anderen Seite mit der Roboterhand (24) verbunden ist.

**15.** Knickarmroboter nach einem der Ansprüche 10 bis 14, **dadurch gekennzeichnet, daß** das Koppelgetriebe das Verbindungselement mit der Spiegelaufnahme verbindet und den Aufbau eines Planetengetriebes aufweist.

**16.** Knickarmroboter nach Anspruch 15, **dadurch gekennzeichnet, daß** das Sonnenrad des Planetengetriebes fest mit dem Grundkörper verbunden ist und das Hohlrad fest mit dem Verbindungselement verbunden ist, wobei mindestens ein Planetenrad drehbar an der Spiegelaufnahme angeschlossen ist.

**17.** Knickarmroboter nach einem der Ansprüche 8 bis 16, **dadurch gekennzeichnet, daß** der Winkel zwischen der Spiegelfläche des zweiten Spiegels (20II) und der vierten Achse (4) in der Schnittebene wie folgt ermittelbar ist:

$$\alpha_2 = 45° \pm \arctan a_3/a_2 * 0{,}5,$$

wobei $a_2$ der Abstand zwischen dem zweiten und dritten Spiegel (20II,20III) und $a_3$ der Abstand zwischen dem dritten und vierten Spiegel (20III,20IV) voneinander bedeuten und das Vorzeichen von der Lage der vierten Achse (4) im Raum abhängt.

**18.** Knickarmroboter nach einem der Ansprüche 8 bis 17, **dadurch gekennzeichnet, daß** der Winkel zwischen der Spiegelfläche des dritten Spiegels (20III) und der fünften Achse (5) in der Schnittebene wie folgt ermittelbar ist:

$$\alpha_{3A} = 45° - \arctan a_3/a_2 * 0{,}5$$

wobei $a_2$ der Abstand zwischen dem zweiten und dritten Spiegel (20II,20III) und $a_3$ der Abstand zwischen dem dritten und vierten Spiegel (20III,20IV) voneinander bedeuten.

**19.** Knickarmroboter nach einem der Ansprüche 1 bis 18, **dadurch gekennzeichnet, daß** der Innenraum der gesamten Strahlführung gegenüber der Antriebstechnik der Achsen (1,2,3,4,5) abgedichtet ist.

**20.** Knickarmroboter nach einem der Ansprüche 1 bis 19, **dadurch gekennzeichnet, daß** die Lasereinrichtung (14) justierbar ausgestaltet ist.

**21.** Knickarmroboter nach einem der Ansprüche 1 bis 20, **dadurch gekennzeichnet, daß** die Länge der vierten Achse (4) geeignet vorwählbar ist.

**22.** Knickarmroboter nach einem der Ansprüche 1 bis 21, **dadurch gekennzeichnet, daß** eine beliebig gestaltete Prozeßgaszuführung vorhanden ist.

**23.** Knickarmroboter nach einem der Ansprüche 1 bis 22, **dadurch gekennzeichnet, daß** die Laserein-richtung (14) bezüglich der Laserstrahlenerzeu-gungsart frei wählbar ist.

Fig.1

Fig.3

Fig.2

Fig.5

Fig.4

**Europäisches**
**Patentamt**

**EUROPÄISCHER RECHERCHENBERICHT**

Nummer der Anmeldung

EP 03 02 3355

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FR 2 551 378 A (JUNGHEINRICH KG) 8. März 1985 (1985-03-08) * Zusammenfassung; Abbildungen 1,2,6,7 * * Seite 2, Zeile 4 - Zeile 10 * * Seite 4, Absatz 1 * * Seite 5, Zeile 28 - Zeile 31 * * Seite 8, Zeile 13 - Zeile 21 * * Seite 10, Absatz 2 * * Seite 11, letzter Absatz - Seite 12, Absatz 2 * * Seite 16, Absatz 4 - Absatz 5 * ----- | 1-8,21, 23 | B23K26/10 B25J19/00 |
| A | US 4 698 483 A (CAPELLO GIUSEPPE ET AL) 6. Oktober 1987 (1987-10-06) * Zusammenfassung; Abbildungen 1-4 * ----- | 1-8, 19-21 | |
| A | PRITSCHOW G ET AL: "KINCKARMROBOTER ZUR 3-D-LASERBEARBEITUNG HOHE GENAUIGKEIT UND INNENLIEGENDE STRAHLFUHRUNG" WERKSTATTSTECHNIK, SPRINGER VERLAG. BERLIN, DE, Bd. 85, Nr. 6, 1. Juni 1995 (1995-06-01), Seiten 318-322, XP000509040 ISSN: 0340-4544 * das ganze Dokument * ----- | 1-8, 19-21 | |
| | | | **RECHERCHIERTE SACHGEBIETE (Int.Cl.7)** B25J B23K |

Der vorliegende Recherchenbericht wurde für alle Patentansprüche erstellt

| Recherchenort | Abschlußdatum der Recherche | Prüfer |
|---|---|---|
| München | 13. April 2004 | Lumineau, S |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**　　　　EP 03 02 3355

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-04-2004

| Im Recherchenbericht angeführtes Patentdokument | | Datum der Veröffentlichung | Mitglied(er) der Patentfamilie | | Datum der Veröffentlichung |
|---|---|---|---|---|---|
| FR 2551378 | A | 08-03-1985 | DE | 3331660 A1 | 28-03-1985 |
| | | | FR | 2551378 A1 | 08-03-1985 |
| US 4698483 | A | 06-10-1987 | IT | 206702 Z2 | 01-10-1987 |
| | | | AT | 43981 T | 15-06-1989 |
| | | | BR | 6602395 U | 24-11-1987 |
| | | | CA | 1256508 A1 | 27-06-1989 |
| | | | DE | 3663897 D1 | 20-07-1989 |
| | | | EP | 0224451 A1 | 03-06-1987 |
| | | | JP | 62130788 A | 13-06-1987 |
| | | | SU | 1568884 A3 | 30-05-1990 |

EPO FORM P0461

Für nähere Einzelheiten zu diesem Anhang : siehe Amtsblatt des Europäischen Patentamts, Nr.12/82